# EUROPEAN PATENT APPLICATION

(11) **EP 3 978 771 A1**
(43) Date of publication of application: **06.04.2022**
(21) Application number: 21194802.1
(22) Date of filing: 03.09.2021
(51) Int. Cl.: F16D 3/223

(54) **AUTOMATIC ASSEMBLY APPARATUS AND AUTOMATIC ASSEMBLY METHOD FOR FIXED TYPE CONSTANT VELOCITY UNIVERSAL JOINT**

(30) Priority: 23.09.2020 JP 2020158602
(71) Applicant: NTN Corporation, Osaka-shi, Osaka 550-0003 (JP)
(72) Inventor: Muramatsu, Shoutarou, Iwata-shi, Shizuoka (JP)
(74) Representative: Grünecker Patent- und Rechtsanwälte PartG mbB

(57) **Abstract**

A cassette (5) is retained by fitting a shaft part (42), which is provided for a cassette cage part (32) of an automatic assembly apparatus, into a shaft hole (9) of an inner joint member (2) and by gripping an inner peripheral surface of a cage (4) by a gripping means (50) of the cassette cage part (32). The cassette (5) retained by the cassette cage part (32) as mentioned above is inserted into an inner periphery of an outer joint member (7) in a state in which an axis line of the cassette (5) and an axis line of the outer joint member (7) are made to be orthogonal to each other, and thereafter, the cassette (5) is rotated in the inner periphery of the outer joint member (7).

## Description

### Technical Field

The present invention relates to an automatic assembly apparatus and an automatic assembly method for a fixed type constant velocity universal joint.

### Background Art

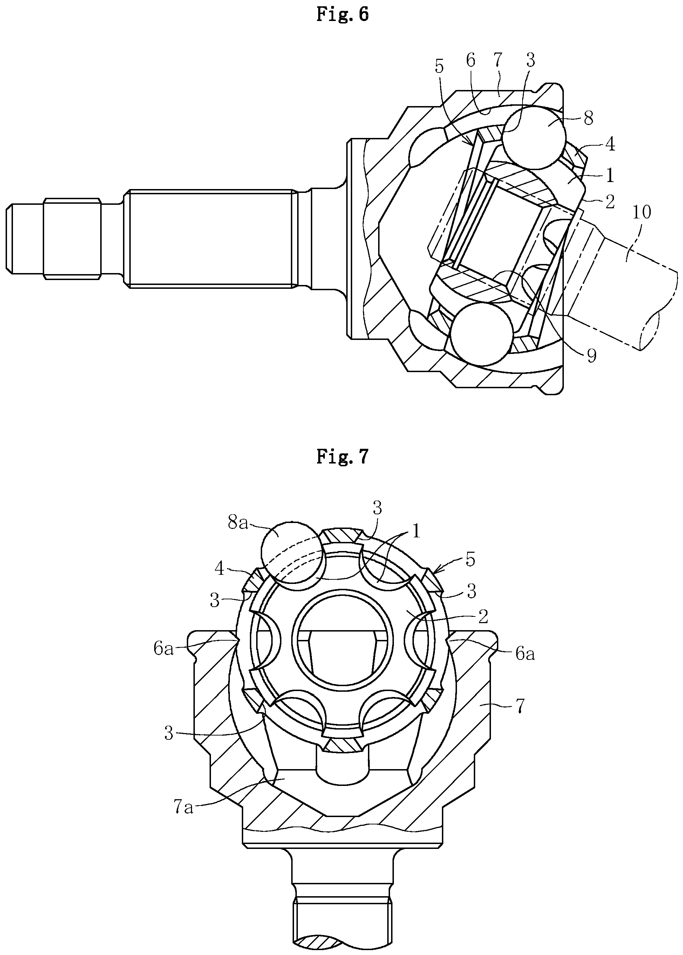

As a constant velocity universal joint which transmits torque at a constant velocity while tolerating angle change between two axes, a fixed type constant velocity universal joint as illustrated in Fig. 6 is well-known. This fixed type constant velocity universal joint has: an inner joint member 2 as an inside joint member, with a plurality of track grooves 1 formed on an outer periphery thereof; an outer joint member 7 as an outside joint member, with a plurality of track grooves 6 formed on an inner periphery thereof; a plurality of balls 8 which engage with both track grooves 1 and 6 to transmit torque between the inner joint member 2 and the outer joint member 7; and a cage 4 having a plurality of pockets 3 which house the balls 8 one by one and fitting an outer peripheral spherical surface of the inner joint member 2 and an inner peripheral spherical surface of the outer joint member 7. An end portion of a shaft 10 is inserted into a shaft hole 9 formed in the inner joint member 2, and the shaft 10 and the shaft hole 9 are spline-fitted and coupled so as to be operable to transmit the torque.

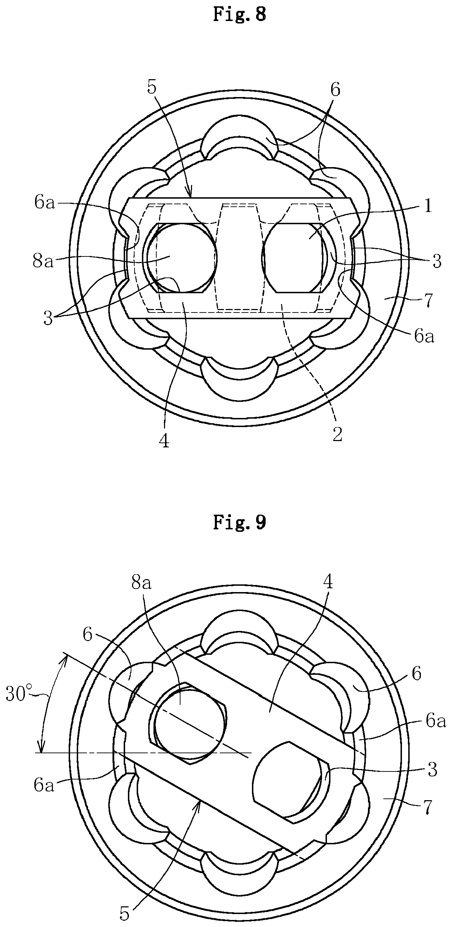

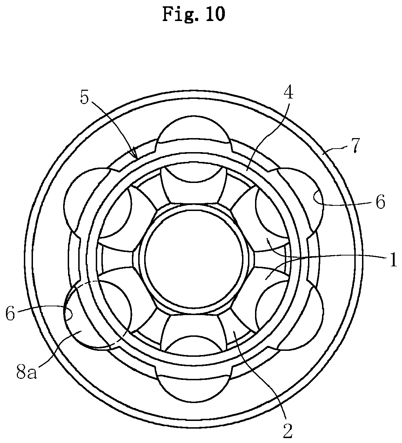

In the above-described Patent Literature 1, a method in which the above-mentioned fixed type constant velocity universal joint is automatically assembled is shown. Specifically, first, a temporary assembly of the cage 4 and the inner joint member 2 (hereinafter, referred to as a "cassette 5") is conveyed to an automatic assembly apparatus and positioning of the pockets 3 of the cage 4 and the track grooves 1 of the inner joint member 2 in a circumferential direction is conducted. Then, one of the balls 8 (a reference ball 8a) is assembled into one of the pockets 3 of the cage 4. This reference ball 8a is engaged with the track groove 1 of the inner joint member 2 and the pocket 3 of the cage 4, thereby conducting the positioning of both (rotation locking). Thereafter, as illustrated in Fig. 7, in a state in which an axis line of the cassette 5 and an axis line of the outer joint member 7 are made to be orthogonal to each other, the cassette 5 is inserted into the inner periphery of the outer joint member 7. At this time, as illustrated in Fig. 8, each of the pockets 3 which are provided on both ends of the cage 4 in a horizontal direction is fitted to each of ridges 6a which are provided between the track grooves 6 of the outer joint member 7, thereby avoiding interference of the cage 4 with the outer joint member 7. Thereafter, as illustrated in Fig. 9, the cassette 5 is rotated by 30° with the shaft center of the outer joint member 7 as a center. Thereafter, the cassette 5 is rotated by 90° with a rotational axis in the horizontal direction as a center, whereby as illustrated in Fig. 10, the cassette 5 is housed in the inner periphery of the outer joint member 7. Thereafter, the cassette 5 is inclined, each of the pockets 3 is exposed outside the outer joint member 7 one by one, and each of the balls 8 is assembled into each of the pockets 3.

### Citation List

### Patent Literature

Patent Literature 1: JP-B-6-15885

### Summary of Invention

### Technical Problem

In the above-described fixed type constant velocity universal joint, since a diameter of the reference ball 8a is slightly larger than a width of the pocket 3 of the cage 4 in an axis direction, the reference ball 8a is pushed into the pocket 3 of the cage 4 from a side of the outer periphery and is attached thereto. In this case, since the reference ball 8a attached to the pocket 3 is retained by the cage, in the subsequent steps, the reference ball 8a never fall off from the pocket 3. However, in a case where the diameter of the reference ball 8a is smaller than the width of the pocket 3 of the cage 4 in the axis direction, the reference ball 8a is not retained by the cage 4. When the cassette 5 is moved, it is likely that the reference ball 8a fall off from the pocket 3.

On the other hand, in a case where the cassette 5 is assembled to the outer joint member 7 without assembling the reference ball 8a, when the cassette 5 is inserted into the inner periphery of the outer joint member 7 (see Fig. 7) and the cassette 5 is rotated in the inner periphery of the outer joint member 7 (see Figs. 8 to 10), the cage 4 interferes with the outer joint member 7 and rotates relative to the inner joint member 2 and it is likely that positions of the pockets 3 of the cage 4 deviate from positions of the track grooves 1 of the inner joint member 2. When in this state, the balls 8 are assembled to the pockets 3 of the cage 4, assembling failure is caused.

In view of the above-described circumstances, an object of the present invention is to prevent positional deviation of the cage and the inner joint member and to prevent failure of assembling balls without requiring the reference ball upon automatically assembling the cassette (the cage and the inner joint member) of the fixed type constant velocity universal joint to the outer joint member. Solution to Problem

In order to solve the problems, the present invention provides a method for automatically assembling a fixed type constant velocity universal joint, which includes: an inner joint member which has a plurality of track grooves and a shaft hole for attaching a shaft; an outer joint member which has a plurality of track grooves; a plurality of balls which engage with the track grooves of the inner joint member and the track grooves of the outer joint member to transmit torque; and a cage having a plurality of pockets which house the plurality of balls and fitting an outer peripheral spherical surface of the inner joint member and an inner peripheral spherical surface of the outer joint member. This method includes the successive steps of: conveying, into an automatic assembly apparatus, a cassette being configured by fitting an inner peripheral spherical surface of the cage and the outer peripheral spherical surface of the inner joint member; retaining the cassette by fitting a shaft part being provided for a cassette cage part of the automatic assembly apparatus into the shaft hole of the inner joint member and by gripping the inner peripheral surface of the cage by a gripping means being provided for the cassette cage part; inserting the cassette into an inner periphery of the outer joint member in a state in which an axis line of the cassette being retained by the cassette cage part and an axis line of the outer joint member are made to be orthogonal to each other; rotating the cassette being retained by the cassette cage part relative to the outer joint member in the inner periphery of the outer joint member; and inserting the balls into the pockets of the cage.

As described above, the inner peripheral surface of the cage is gripped by the gripping means which is provided for the cassette cage part of the automatic assembly apparatus, thereby allowing rotation of the cage to be regulated. In this state, by inserting the cassette into the inner periphery of the outer joint member and rotating the cassette in the inner periphery of the outer joint member, since in these steps, relative rotation of the cage and the inner joint member is regulated, positional deviation of the pockets and the track grooves of the inner joint member can be prevented.

The above-described assembly method can be realized by using an automatic assembly apparatus for assembling a fixed type constant velocity universal joint, which includes: an inner joint member which has a plurality of track grooves and a shaft hole for attaching a shaft; an outer joint member which has a plurality of track grooves; a plurality of balls which engage with the track grooves of the inner joint member and the track grooves of the outer joint member to transmit torque; and a cage having a plurality of pockets which house the plurality of balls and fitting an outer peripheral spherical surface of the inner joint member and an inner peripheral spherical surface of the outer joint member, and the automatic assembly apparatus includes: an outer joint member cage part which retains the outer joint member; a cassette cage part which retains a cassette being configured by fitting an inner peripheral spherical surface of the cage and an outer peripheral spherical surface of the inner joint member; a linear driving part which moves the cassette cage part in an axis direction of the outer joint member relative to the outer joint member cage part; and a rotation driving part which rotates the cassette cage part relative to the outer joint member cage part, and the cassette cage part includes a shaft part which fits the shaft hole of the inner joint member and a gripping means which grips an inner peripheral surface of the cage.

The gripping means includes, for example, a pressing part which is pressed against the inner peripheral surface of the cage. In this case, by pressing the pressing part against the cylindrical part which is provided for the inner peripheral surface of the cage, it is made easy to grip the inner peripheral surface of the cage. Advantageous Effects of Invention

As described above, according to the present invention, upon automatically assembling the cassette to the outer joint member, since without requiring the reference ball, positional deviation of the track grooves of the inner joint member and the pockets of the cage can be prevented, failure of assembling the balls upon assembling the balls into the pockets of the cage can be prevented.

### Brief Description of Drawings

Fig. 1 is a flowchart showing steps in an automatic assembly method for a constant velocity universal joint according to one embodiment of the present invention.
Fig. 2 is a partial cross-sectional front view illustrating a cassette insertion step in the above-mentioned method and illustrates a state before inserting a cassette into an inner periphery of an outer joint member.
Fig. 3A is a diagram illustrating a retaining head, which is provided for a cassette cage part of a cassette insertion apparatus in Fig. 2, viewed from an axis direction of a shaft part.
Fig. 3B is a cross-sectional view taken from line B-B in Fig. 3A.
Fig. 4 is a partial cross-sectional front view illustrating a cassette insertion step in the above-mentioned method and is a diagram illustrating a state in which the cassette is inserted into the inner periphery of the outer joint member.
Fig. 5 is a partial cross-sectional front view illustrating the cassette insertion step in the above-mentioned method and is a diagram illustrating a state in which the cassette is rotated in the inner periphery of the outer joint member.
Fig. 6 is a cross-sectional view of the fixed type constant velocity universal joint.
Fig. 7 is a cross-sectional view illustrating a view in which the cassette is inserted into the inner periphery of the outer joint member in the conventional automatic assembly method.
Fig. 8 is a view of the cassette and the outer joint member in Fig. 7, viewed from above.
Fig. 9 is a view in a state in which the cassette in the state illustrated in Fig. 8 is rotated around an axis line of the outer joint member.
Fig. 10 is a view in which the cassette in the state illustrated in Fig. 9 is rotated around a rotational axis in a horizontal direction.

### Description of Embodiment

Hereinafter, an embodiment of the present invention will be described with reference to the accompanying drawings.

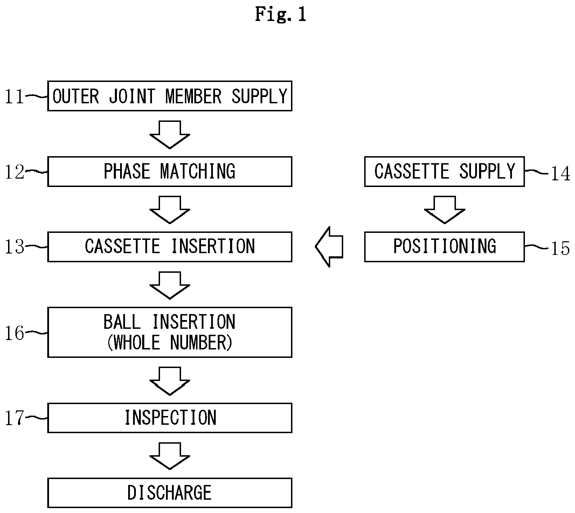

An assembly method for a fixed type constant velocity universal joint according to one embodiment of the present invention is implemented successively through steps shown in Fig. 1. Hereinafter, each of the steps will be described in order. Note that since a configuration of the fixed type constant velocity universal joint assembled in the present embodiment is the same as that illustrated in Fig. 6, the description will be given by using the same reference signs and component names.

First, in an outer joint member supply step 11, an outer joint member 7 is conveyed into an automatic assembly apparatus. Then, in a phase matching step 12, the outer joint member 7 is rotated around a shaft center as needed, thereby locating each of track grooves 6 of the outer joint member 7 in a predetermined phase. The outer joint member 7 for which phase matching of the track grooves 6 is made as mentioned above is transported to a cassette insertion step 13.

On the other hand, in a cassette supply step 14, a cassette 5 which is constituted of an inner joint member 2 and a cage 4 is conveyed into the automatic assembly apparatus. The cassette 5 is obtained by inserting the inner joint member 2 into an inner periphery of the cage 4 and fitting an inner peripheral spherical surface of the cage 4 and an outer peripheral spherical surface of the inner joint member 2 so as to integrate the inner joint member 2 and the cage 4. Then, in a positioning step 15, positions of pockets 3 of the cage 4 and positions of track grooves 1 of the inner joint member 2 in a circumferential direction are matched. The cassette 5 in which positioning of the pockets 3 and the track grooves 1 is made as mentioned above is transported to the cassette insertion step 13.

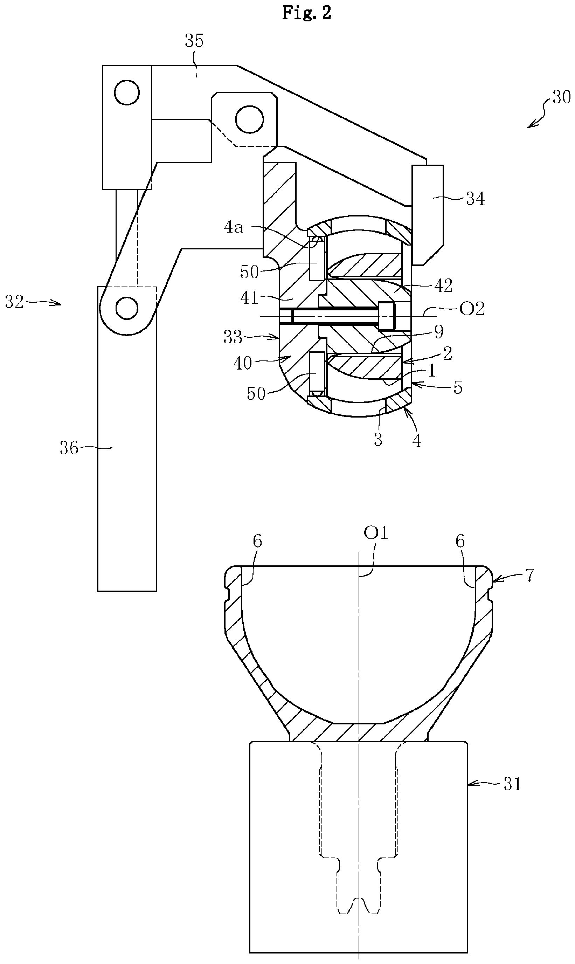

In the cassette insertion step 13, the cassette 5 is assembled into an inner periphery of the outer joint member 7 by a cassette insertion apparatus 30 illustrated in Fig. 2. The cassette insertion apparatus 30 includes: an outer joint member cage part 31 which retains the outer joint member 7; a cassette cage part 32 which retains the cassette 5; an ascending/descending driving part (not illustrated) as a linear driving part which moves the cassette cage part 32 in an axis direction of the outer joint member 7 retained by the outer joint member cage part 31; and a rotation driving part (not illustrated) which rotates the cassette cage part 32. In the present embodiment, as the rotation driving part, a first rotation driving part which rotates the cassette cage part 32 around a rotational axis in a vertical direction and a second rotation driving part which rotates the cassette cage part 32 around a rotational axis in a horizontal direction are provided.

The cassette cage part 32 has: a retaining head 33 to which the cassette 5 is attached; a locking part 34 which presses an end surface of the cage 4; and a cylinder 36 which drives the locking part 34 via a link mechanism 35.

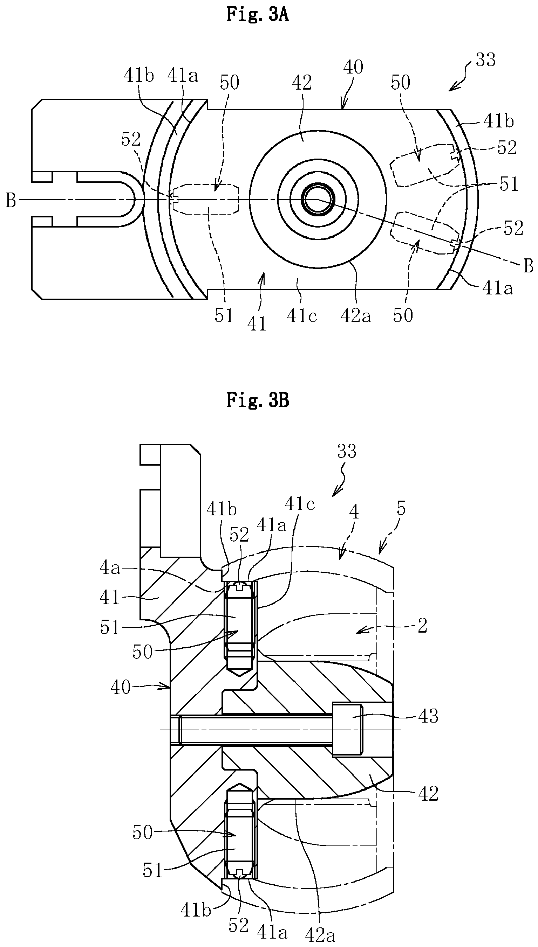

As illustrated in Figs. 3A and 3B, the retaining head 33 includes a head main body 40 and a gripping means including ball plungers 50. In the present embodiment, the ball plungers 50 are provided in a plurality of positions (three positions in an illustrated example) which are separated from one another in a circumferential direction.

The head main body 40 has a platy base part 41 and a shaft part 42 which protrudes from the base part 41. In the illustrated example, the base part 41 and the shaft part 42 are formed as separate bodies and are coupled by a bolt 43. The base part 41 has large-diameter cylindrical surfaces 41a and shoulder surfaces 41b. The large-diameter cylindrical surfaces 41a are provided coaxially with a cylindrical outer peripheral surface 42a of the shaft part 42. Each of the large-diameter cylindrical surfaces 41a has a large diameter than a diameter of the cylindrical outer peripheral surface 42a of the shaft part 42. Each of the shoulder surfaces 41b extends from a base end of each of the large-diameter cylindrical surfaces 41a (a left end in Fig. 3B) to an outer diameter.

Each of the ball plungers 50 includes a cylindrical plunger main body 51, a ball 52 as a pressing part, and a spring (not illustrated). The ball 52 is provided in a manner retractable from an opening portion of the plunger main body 51. The spring biases the ball 52 to a side on which the ball 52 protrudes from the opening portion of the plunger main body 51. In the illustrated example, the plunger main body 51 is inserted into a hole which is provided for the large-diameter cylindrical surfaces 41a of the base part 41 of the head main body 40. The plunger main body 51 is fixed to the head main body 40 in a position where the ball 52 slightly protrudes from each of the large-diameter cylindrical surfaces 41a.

As illustrated in Fig. 2, the outer joint member 7 is set in the outer joint member cage part 31 in a state in which an opening portion of the outer joint member 7 faces upward and each of the track grooves 6 is located in the predetermined phase. In the state in which the outer joint member 7 is set in the outer joint member cage part 31, rotation of the outer joint member 7 around a shaft center O1 is regulated.

Then, in a state in which a shaft center O2 of the shaft part 42 of the retaining head 33 of the cassette cage part 32 is held horizontally, the cassette 5 in which the positioning of the pockets 3 and the track grooves 1 is made is attached to the shaft part 42. Specifically, the shaft part 42 of the retaining head 33 is inserted into a shaft hole 9 of the inner joint member 2 of the cassette 5 (see Fig. 3B). An inner peripheral surface of the inner joint member 2 (crests of a spline hole in the illustrated example) and the cylindrical outer peripheral surface 42a of the shaft part 42 are fitted to each other. An end surface of the inner joint member 2 is brought into contact with an end surface 41c of the base part 41 of the head main body 40 of the retaining head 33. Thus, the inner joint member 2 is located in a predetermined position on the retaining head 33.

Simultaneously with this, the large-diameter cylindrical surfaces 41a of the base part 41 of the head main body 40 of the retaining head 33 and a cylindrical part 4a which is provided in an end portion of an inner peripheral surface of the cage 4 in an axis direction (a left end in Fig. 3B) are fitted to each other. And the end surface of the cage 4 is brought into contact with the shoulder surfaces 41b of the base part 41. At this time, each of the balls 52 of the ball plungers 50 which are provided for the retaining head 33 is pushed to a side of the inner periphery by the cylindrical part 4a of the inner peripheral surface of the cage 4 (a side on which each of the balls 52 is retracted into the plunger main body 51) against elasticity of the spring. Thereby each of the balls 52 is pressed against the cylindrical part 4a of the inner peripheral surface of the cage 4. Thus, the inner peripheral surface of the cage 4 is gripped and rotation and movement of the inner peripheral surface of the cage 4 in the axis direction relative to the head main body 40 of the cage 4 are regulated. A force of gripping the inner peripheral surface of the cage 4 by the ball plungers 50 (that is, the elasticity of the spring) is set to approximately a force with which the cassette 5 can be pulled from the retaining head 33 by a person's hand.

Thereafter, the cylinder 36 is extended, and the cage 4 is sandwiched by the locking part 34 and the shoulder surfaces 41b of the head main body 40 from both sides in the axis direction (see Fig. 2). Note that as described above, since the cage 4 is retained by the ball plungers 50, when there is no need in particular, the locking part 34, the cylinder 36 for driving the locking part 34, and the link mechanism 35 may be omitted. In this case, the cassette cage part 32 can be simplified, and a step of driving the locking part 34 can be omitted.

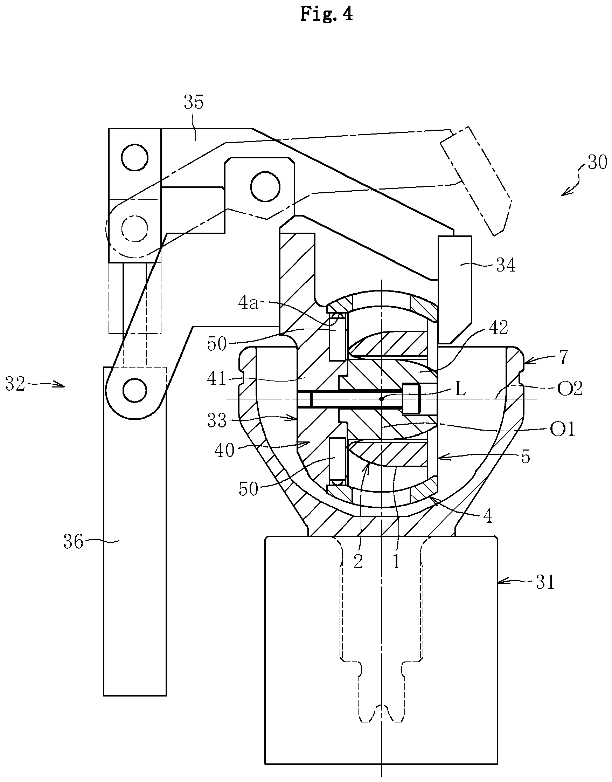

As described above, in a state in which the cassette 5 is retained by the cassette cage part 32, the cassette cage part 32 and the cassette 5 are descended by the ascending/descending driving part, thereby inserting the cassette 5 to the inner periphery of the outer joint member 7 as illustrated in Fig. 4. At this time, the pockets 3 of the cage 4 on both ends in the horizontal direction are fitted to ridges 6a, each of which is located between the track grooves 6 of the outer joint member 7 (see Figs. 7 and 8). Thereby, interference between the cage 4 and the outer joint member 7 can be avoided.

Thereafter, the cassette cage part 32 and the cassette 5 are rotated by the first rotation driving part with the shaft center O1 of the outer joint member 7 as a center. And while an outer peripheral spherical surface of the cage 4 and an inner peripheral spherical surface of the outer joint member 7 are being fitted to each other, positions of the pockets 3 of the cage 4 in the circumferential direction are matched with the track grooves 6 of the outer joint member 7 (see Fig. 9). Note that in a case where a number of the balls 8 is six, as illustrated in Fig. 9, a rotation angle of the cassette 5 is 30°. In a case where the number of the balls 8 is eight, the rotation angle of the cassette 5 is 22.5°.

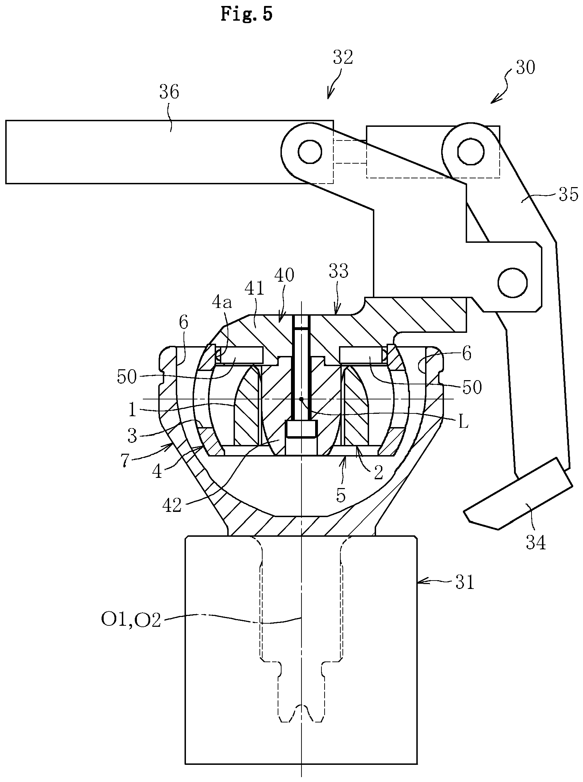

Thereafter, by driving the cylinder 36, the locking part 34 is retracted to a side on which the locking part 34 is separated from the cage 4 (see a chain line in Fig. 4). Then, the cassette cage part 32 and the cassette 5 are rotated by the second rotation driving part by 90° with the rotational axis in the horizontal direction as a center, specifically, with a straight line L. The straight line L passes through an intersecting point of the shaft center O1 of the outer joint member 7 and the shaft center O2 of the cassette 5 and is orthogonal to the shaft center O1 and the shaft center O2, as a center. Thus, as illustrated in Fig. 5, the shaft center O2 of the cassette 5 and the shaft center O1 of the outer joint member 7 match each other, and the cassette 5 is housed in the inner periphery of the outer joint member 7.

As described above, in a state in which the inner peripheral surface of the cage 4 is gripped by the gripping means (ball plungers 50) which is provided for the retaining head 33 of the cassette cage part 32, the cassette 5 is inserted into the inner periphery of the outer joint member 7 and the cassette 5 is rotated in the inner periphery of the outer joint member 7. Thus, the rotation of the cage 4 relative to the retaining head 33 can be regulated even when the cage 4 and the outer joint member 7 contact each other during operating the cassette 5 and the outer joint member 7. On the other hand, since the inner joint member 2 which is fitted to the shaft part 42 of the retaining head 33 is located in the inner periphery of the cage 4, upon assembling the cassette 5 into the outer joint member 7, no interference with the outer joint member 7 is caused and no rotation relative to the retaining head 33 is caused. As described above, relative rotation of the cage 4 and the inner joint member 2 is regulated, and while positional deviation of the pockets 3 of the cage 4 and the track grooves 1 of the inner joint member 2 is prevented, the cassette 5 can be assembled into the outer joint member 7.

Thereafter, a sub-assembly of the outer joint member 7 and the cassette 5 is transported to a ball insertion step 16 (see Fig. 1). In this step, the balls 8 are attached to ball tracks which are formed by the track grooves 6 of the outer joint member 7 and the track grooves 1 of the inner joint member 2, which face the track grooves 6, one by one. Specifically, one of the pockets 3 of the cage 4 is exposed outside the outer joint member 7 by inclining the cassette 5, and the ball 8 is inserted into the exposed one of the pockets 3. This work is conducted for all of the pockets 3, thereby assembling the balls 8 into all of the ball tracks. Thereafter, after undergoing of an inspection step 17, the fixed type constant velocity universal joint is discharged from the automatic assembly apparatus.

The present invention is not limited to the above-described embodiment. For example, the gripping means which grips the inner peripheral surface of the cage 4 is not limited to the ball plungers 50. The gripping means may be configured by an elastic member such as rubber. For example, the elastic member can be provided for the large-diameter cylindrical surfaces 41a of the head main body 40. In this case, the cage 4 is attached to the head main body 40 while the elastic member is being elastically deformed by the inner peripheral surface of the cage 4. By pressing the elastic member against the inner peripheral surface of the cage 4, the inner peripheral surface of the cage 4 is gripped by elasticity of the elastic member.

In addition, although in the above-described embodiment, a case where the balls 52 of the ball plungers 50 in the three positions are pressed against the inner peripheral surface of the cage 4 and the inner peripheral surface of the cage 4 is thereby gripped is described, the present invention is not limited to the above-mentioned case. The inner peripheral surface of the cage 4 may be gripped by the balls 52 of the ball plungers 50 and the large-diameter cylindrical surfaces 41a of the base part 41 of the head main body 40 in cooperation with each other. For example, the balls 52 of the two ball plungers 50 provided on a right side in Fig. 3A and the large-diameter cylindrical surface 41a on a left side in Fig. 3A may grip the inner peripheral surface of the cage 4. In this case, the ball plunger 50 on the left side in Fig. 3A may be omitted.

In addition, although in the above-described embodiment, when the cassette 5 retained by the cassette cage part 32 is inserted into the inner periphery of the outer joint member 7, the cassette cage part 32 and the cassette 5 are descended, the present invention is not limited to this embodiment. For example, the cassette cage part 32 and the cassette 5 may be kept still and the outer joint member 7 retained by the outer joint member cage part 31 may be ascended. In addition, a relative movement direction of the cassette 5 and the outer joint member 7 at this time is not limited to a vertical direction and may be a direction which inclines relative to the vertical direction (for example, a horizontal direction).

In addition, although in the above-described embodiment, when the cassette 5 retained by the cassette cage part 32 is rotated in the inner periphery of the outer joint member 7, the cassette cage part 32 and the cassette 5 are rotated, the present invention is not limited to this embodiment. The cassette cage part 32 and the cassette 5 may be kept still and the outer joint member 7 retained by the outer joint member cage part 31 may be rotated.

In addition, the fixed type constant velocity universal joint to which the assembly method and the assembly apparatus according to the present invention are applicable is not limited to that illustrated in Fig. 6. For example, although in Fig. 6, a Rzeppa type constant velocity universal joint whose track grooves 1 and 6 are constituted of only arcs is illustrated, the constant velocity universal joint may be an undercut free type constant velocity universal joint whose track grooves have straight line parts. In addition, although in Fig. 6, the track grooves 1 and 6 extend along the axis direction, the track grooves may extend in a direction inclining relative to the axis direction. In addition, although in Fig. 6, the number of the balls is six, the present invention is not limited to this, and for example, the number of the balls may be eight.

### Reference Signs List

- 1: Track grooves
- 2: Inner joint member (inside joint member)
- 3: Pockets
- 4: Cage
- 4a: Cylindrical part
- 5: Cassette
- 6: Track grooves
- 7: Outer joint member (outside joint member)
- 8: Balls
- 9: Shaft hole
- 10: Shaft
- 30: Cassette insertion apparatus
- 31: Outer joint member cage part
- 32: Cassette cage part
- 33: Retaining head
- 34: Locking part
- 35: Link mechanism
- 36: Cylinder
- 40: Head main body
- 41: Base part
- 42: Shaft part
- 43: Bolt
- 50: Ball plungers (gripping means)
- 51: Plunger main body
- 52: Balls (pressing part)

## Claims

1. An automatic assembly apparatus (30) for assembling a fixed type constant velocity universal joint, the fixed type constant velocity universal joint comprising:
an inner joint member (2) which has a plurality of track grooves (1) and a shaft hole (9) for attaching a shaft (10);
an outer joint member (7) which has a plurality of track grooves (6);
a plurality of balls (8) which engage with the track grooves (1) of the inner joint member (2) and the track grooves (6) of the outer joint member (7) to transmit torque; and
a cage (4) having a plurality of pockets (3) which house the plurality of balls (8) and fitting an outer peripheral spherical surface of the inner joint member (2) and an inner peripheral spherical surface of the outer joint member (7),
**characterized in that**
the automatic assembly apparatus (30) comprises:
an outer joint member cage part (31) which retains the outer joint member (7);
a cassette cage part (32) which retains a cassette (5) being configured by fitting an inner peripheral spherical surface of the cage (4) and an outer peripheral spherical surface of the inner joint member (2);
a linear driving part which moves the cassette cage part (32) in an axis direction of the outer joint member (7) relative to the outer joint member cage part (31); and
a rotation driving part which rotates the cassette cage part (32) relative to the outer joint member cage part (31), and
the cassette cage part (32) includes a shaft part (42) which fits the shaft hole (9) of the inner joint member (2) and a gripping means (50) which grips an inner peripheral surface of the cage (4).

2. The automatic assembly apparatus (30) for assembling a fixed type constant velocity universal joint according to claim 1, **characterized in that** the gripping means (50) includes a pressing part (52) which is pressed against the inner peripheral surface of the cage (4).

3. The automatic assembly apparatus for assembling a fixed type constant velocity universal joint according to claim 2, **characterized in that** the pressing part (52) is pressed against a cylindrical part (4a) being provided for the inner peripheral surface of the cage (4).

4. An automatic assembly method for automatically assembling a fixed type constant velocity universal joint, the fixed type constant velocity universal joint comprising:
an inner joint member (2) which has a plurality of track grooves (1) and a shaft hole (9) for attaching a shaft (10);
an outer joint member (7) which has a plurality of track grooves (6);
a plurality of balls (8) which engage with the track grooves (1) of the inner joint member (2) and the track grooves (6) of the outer joint member (7) to transmit torque; and
a cage (4) having a plurality of pockets (3) which house the plurality of balls (8) and fitting an outer peripheral spherical surface of the inner joint member (2) and an inner peripheral spherical surface of the outer joint member(7),
**characterized in that**
the automatic assembly method comprises the successive steps of:
conveying, into an automatic assembly apparatus (30), a cassette (5) being configured by fitting an inner peripheral spherical surface of the cage (4) and the outer peripheral spherical surface of the inner joint member (2);
retaining the cassette (5) by fitting a shaft part (42) being provided for a cassette cage part (32) of the automatic assembly apparatus (30) into the shaft hole (9) of the inner joint member (2) and by gripping the inner peripheral surface of the cage (4) by a gripping means (50) being provided for the cassette cage part (32);
inserting the cassette (5) into an inner periphery of the outer joint member (7) in a state in which an axis line (O2) of the cassette (5) being retained by the cassette cage part (32) and an axis line (O1) of the outer joint member (7) are made to be orthogonal to each other;
rotating the cassette (5) being retained by the cassette cage part (32) relative to the outer joint member (7) in the inner periphery of the outer joint member (7); and
inserting the balls (8) into the pockets (3) of the cage (4).
